# EUROPEAN PATENT SPECIFICATION

(11) **EP 4 053 235 B1**
(45) Date of publication and mention of the grant of the patent: **27.08.2025**
(21) Application number: 20901010.7
(22) Date of filing: 18.11.2020
(51) Int. Cl.: C09J 7/10, C08J 7/04, C09D 1/00, C09D 7/61, C09D 7/63, H01M 4/04, H01M 4/13, H01M 10/42

(54) **METHOD OF MANUFACTURING AN ELECTRODE USING AN INORGANIC LAYER COATING TAPE THEREFOR**
HERSTELLUNGSVERFAHREN FÜR EINE ELEKTRODE UNTER VERWENDUNG EINES ÜBERZUGSBANDS MIT ANORGANISCHER SCHICHT
PROCÉDÉ DE FABRICATION D'UNE ÉLECTRODE EN UTILISANT UN RUBAN DE REVÊTEMENT DE COUCHE INORGANIQUE

(30) Priority: 18.12.2019 KR 20190169546; 09.11.2020 KR 20200148524
(43) Date of publication of application: 07.09.2022
(73) Proprietor: LG Energy Solution, Ltd., Seoul 07335 (KR)
(72) Inventor: KIM, Yong Tae, Daejeon 34122 (KR); PARK, Jun Soo, Daejeon 34122 (KR); JUNG, Bum Young, Daejeon 34122 (KR)
(74) Representative: Hoffmann Eitle
(86) International application number: PCT/KR2020/016241
(87) International publication number: WO 2021/125576

(56) References cited:
- EP-A1- 1 193 284
- WO-A1-01/32798
- WO-A1-2010/035614
- JP-A- 2000 100 437
- JP-A- 2000 276 944
- JP-A- 2003 151 578
- KR-A- 20110 040 141
- KR-A- 20190 066 410

## Description

### [Technical Field]

The present invention relates to a method of manufacturing an electrode for coating the inorganic layer on one surface or both surfaces of an electrode using a coating tape.

### [Background Art]

In general, a secondary battery includes an electrode assembly in which a positive electrode / separator / negative electrode is stacked. Each of the positive electrode and the negative electrode is manufactured by applying a slurry including an electrode active material to one surface or both surfaces of a metal current collector, drying the slurry, and rolling the metal current collector having the dried slurry applied thereto. In addition, the separator serves to pass an electrolyte and ions while preventing an electrical short circuit between the two electrodes by separating the positive electrode and the negative electrode.

In general, the separator includes a porous substrate to prevent an electrical short circuit between the two electrodes. A polyolefin substrate, which is mainly used as a porous substrate, shrinks into a form before elongation at a high temperature, causing a problem in that the positive electrode and the negative electrode are short-circuited. In order to solve this problem, heat resistance is improved by a method such as imparting an additional material to the porous substrate. Alternatively, heat resistance of the entire separator is improved by adding a coating layer to one surface of the porous substrate to improve the heat resistance of the entire separator. At this time, the coating layer may improve the heat resistance of the separator by adding a heat-resistant material to the coating layer itself or by changing the physical properties of the coating layer itself.

The method of improving the heat resistance of the separator as described above increases the temperature at which the separator shrinks. However, when the temperature eventually exceeds a limit temperature, the separator with improved heat resistance also eventually shrinks. The present invention is directed on this point and considers a method of adding a layer to an electrode, the layer capable of preventing an electrical short circuit.

Patent Document 1 discloses a method of forming an inorganic coating layer on at least one surface of an electrode. When the inorganic coating layer is directly applied (coated) to the electrode as in Patent Document 1, inorganic powder penetrates into pores of the electrode as shown in FIG. 1, thereby making the thickness of the inorganic coating layer non-uniform. In addition, the penetrated inorganic powder acts as a resistance of the electrode, thereby deteriorating battery performance.

In Patent Document 2, a solution containing a dispersion medium for inorganic coating and a binder is applied to an electrode active material layer in order to keep the thickness of the inorganic coating layer constant. When the binder is added separately, the density of a battery decreases, and the binder acts as a resistance, deteriorating battery performance. In the case in which a separate coating layer is formed in Patent Document 2, there is a problem in that the coating layer is hardened, causing cracks or tearing.

Patent Document 3 adds a plasticizer to a negative electrode active material layer, but this simply proposes a solution to prevent an internal short circuit of a battery.

Patent Document 4 discloses a method of increasing the workability of a dried coating layer while improving the flexibility of a coating layer by mixing a plasticizer in a slurry for a separator. However, in the case of Patent Document 4, since the coating layer is bonded to a separate inorganic support, the problem that an internal short circuit occurs when the separator shrinks has not been solved. Moreover, since sintering is required to attach the coating layer to the inorganic support, there is a disadvantage in that the pore size and distribution of the coating layer may be different from the pore size and distribution during the initial slurry formation.

As described above, there is a need for a technology capable of improving the safety and performance of the battery by preventing an internal short circuit of the battery.

### - Prior Art Documents -

### - Patent Documents

Korean Patent Application Publication No. 2008-0105853 (2008.12.04) (Patent Document 1)
Korean Patent Application Publication No. 2014-0028754 (2014.03.10) (Patent Document 2)
Japanese Patent Application Publication No. 2012-238396 (2012.12.06) (Patent Document 3)
Korean Patent Application Publication No. 2018-0077030 (2018.07.06) (Patent Document 4)

### [Disclosure]

### [Technical Problem]

The present invention has been made in view of the above problems, and it is an object of the present invention to provide a method of manufacturing an electrode by coating an inorganic layer on one surface or both surfaces of an electrode using a coating tape, the coating tape forming an inorganic layer on one surface or both surfaces of an electrode being in the form of an adhesive tape for insulation so as to be attached to a battery, thereby improving battery performance and preventing an internal short circuit.

### [Technical Solution]

The above and other objects can be accomplished by a method of manufacturing an electrode for coating an inorganic on one surface or both surfaces of an electrode using a coating tape, the method comprising
1) supporting the coating tape on a roll or pressing the coating tape by using a roll, so that the inorganic layer contacts the electrode; and
2) removing the film after applying the inorganic layer of the coating tape to the electrode;
wherein the coating tape comprises:
a film; and
an inorganic layer comprising an inorganic material, a binder, and a plasticizer attached to one surface of the film,
wherein the amount of plasticizer is greater than 17 parts by weight to less than 50 parts by weight based on 100 parts by weight of the binder.

The plasticizer may include a polymer including at least one or more of propylene glycol, benzyl alcohol, n-butyl alcohol, isopropyl alcohol, diethyl phosphate, triethyl phosphate, trimethyl phosphate, tributyl phosphate, isoamyl acetate, ethyl lactate, methyl lactate, ethyl butylate, diethyl carbonate, tributyl propionate, amyl methyl acetate, isopropyl acetate, diisobutyl ketone, methyl ethyl ketone, dipropyl ketone, ethyl butyl ketone, and methyl amyl ketone, or a copolymer thereof.

The plasticizer is present in an amount of greater than 17 parts by weight to less than 50 parts by weight based on 100 parts by weight of the binder. In addition, the plasticizer may be 22 parts by weight or more to 40 parts by weight or less based on 100 parts by weight of the binder.

The weight average molecular weight (M_{w}) of the plasticizer may be 350 g/mol to 500 g/mol.

The inorganic material may be an inorganic material having a dielectric constant of 1 or more, an inorganic material having piezoelectricity, an inorganic material having lithium ion transfer ability, or a mixture of two or more thereof.

The inorganic material may be in a particle form and may have a diameter of 1 nm to 10 µm.

The binder may be polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, or a copolymer thereof.

The adhesion between the inorganic layer and an electrode may be 20 gf/cm or more, and the adhesion between the inorganic layer and the film may be less than the adhesion between the inorganic material layer and the electrode. The coating tape according to the present invention may further include a flame retardant in addition to the inorganic material. The flame retardant may be hydrated aluminum or aluminum hydroxide.

The film may be a release film having different adhesion on both surfaces.

The release film may have an adhesion of the inorganic layer attachment surface equal to or lower than an adhesion of the other surface.

The adhesion between the inorganic layer attachment surface of the film and the inorganic layer itself may be greater than a strength capable of withstanding a weight of the inorganic layer and lower than an adhesion between the inorganic layer itself and the electrode.

The inorganic layer attachment surface of the release film may be coated or surface-treated.

Also disclosed is a method of manufacturing a coating tape, the method comprising: 1) preparing an inorganic slurry by mixing a solvent with an inorganic layer composition comprising an inorganic material, a binder, and a plasticizer; 2) applying the inorganic slurry of step 1) to a film; and 3) drying the inorganic slurry applied in step 2) to form an inorganic layer.

A step of uniformly controlling an amount of the inorganic slurry applied may be added between step 2) and step 3) .

In step 2), the inorganic slurry may have a higher amount of the binder in an electrode contact surface portion than in the other portions.

By coating the inorganic layer on one surface or both surfaces of the electrode using the coating tape as described above, the present invention provides a method of manufacturing an electrode, the method comprising: 1) supporting the coating tape on a roll or pressing the coating tape by using a roll, so that the inorganic layer contacts the electrode; and 2) removing the film after applying the inorganic layer of the coating tape to the electrode.

The roll may include a guide roll, a pressing roll, a heating roll, and a heating and pressing roll.

In step 2), a separate binder may not be added.

### [Description of Drawings]

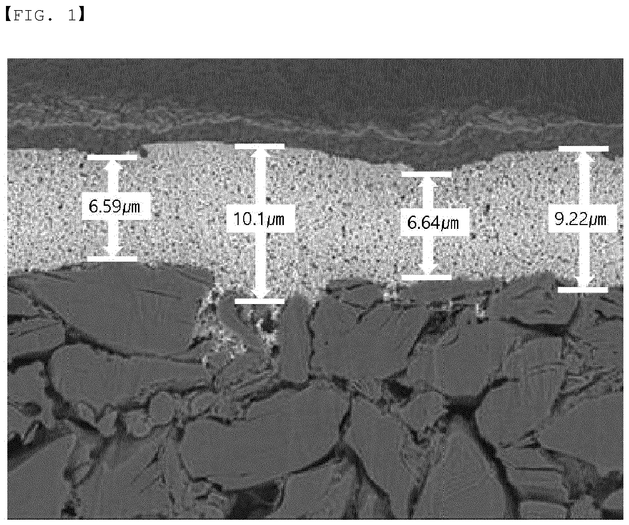

FIG. 1 is an electron micrograph of an active material layer of an electrode in which an inorganic layer is directly applied to the electrode in a slurry state.
FIG. 2 shows the number of fires and direct current resistance according to a composition ratio of a plasticizer during charging and discharging in Examples and Comparative Examples of the present invention.
FIG. 3 is a graph showing a capacity of a battery expressed as a ratio according to charge and discharge cycles of Examples and Comparative Examples of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, the present invention will be described in more detail. This is provided only for illustration of the present invention and should not be construed as limiting the scope of the present invention.

The present invention relates to a method of manufacturing an electrode for coating the inorganic layer on one surface or both surfaces of an electrode using a coating tape comprising a film, and an inorganic layer including an inorganic material, a binder, and a plasticizer attached to one surface of the film, wherein the amount of plasticizer is greater than 17 parts by weight to less than 50 parts by weight based on 100 parts by weight of the binder.

### Inorganic material

The inorganic material may be an inorganic material having a dielectric constant of 1 or more, an inorganic material having piezoelectricity, an inorganic material having lithium ion transfer ability, or a mixture of two or more thereof. It is preferable that the inorganic material is in a particle form.

Examples of the inorganic material having a dielectric constant of 1 or more may be SrTio₃, SnO₂, CeO₂, MgO, NiO, CaO, ZnO, ZrO₂, Y₂O₃, Al₂O₃, TiO₂, SiC or a mixture thereof, but the present invention is not limited thereto.

The inorganic material having piezoelectricity means a material which is a nonconductor at normal pressure but, when a certain pressure is applied thereto, an internal structure is changed and thereby has conductivity. In particular, the inorganic material having piezoelectricity exhibits high dielectric constant characteristics having a dielectric constant of 100 or more and has a potential difference between both faces in which one face is charged by a positive charge and the other face is charged by a negative charge by electric charge generated when particles are tensioned or compressed by a certain pressure.

In a case in which the inorganic material having the above-mentioned characteristics is used, a short-circuit may occur in the positive electrode and the negative electrode, whereby the positive electrode and the negative electrode may not directly contact each other due to the inorganic material, and potential differences in particles may occur due to piezoelectricity of the inorganic material. Accordingly, electron migration, namely, fine current flow, is achieved between the positive electrode and the negative electrode, whereby voltage of the battery is gradually reduced, and therefore safety may be improved.

Examples of the inorganic material having piezoelectricity may be BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), hafnia (HfO₂), or a mixture thereof, but the present invention is not limited thereto.

The inorganic material having lithium ion transfer ability indicates an inorganic material which contains lithium elements, does not save lithium, and transports lithium ions. The inorganic material having lithium ion transfer ability may transfer and transport lithium ions by a defect present in a particle structure. Consequently, lithium ionic conductivity in a battery is improved, and therefore battery performance can be improved.

Examples of the inorganic material having lithium ion transfer ability may be lithium phosphate (Li₃PO₄), lithium titanium phosphate (LiₓTi_{y}(PO₄)₃, where 0<x<2 and 0<y<3), lithium aluminum titanium phosphate (LiₓAl_{y}Ti_{z}(PO₄)₃, where 0<x<2, 0<y<1, and 0<z<3), (LiAlTiP)ₓO_{y}-based glasses (where 0<x<4 and 0<y<13) such as 14Li₂O-9Al₂O₃-38TiO₂-39P₂O₅, lithium lanthanum titanate (LiₓLa_{y}TiO₃, where 0<x<2 and 0<y<3), lithium germanium thiophosphate (LiₓGe_{y}P_{z}S_{w}, where 0<x<4, 0<y<1, 0<z<1, and 0<w<5) such as Li_{3.25}Ge_{0.25}P_{0.75}S₄, lithium nitride (LiₓN_{y}, where 0<x<4 and 0<y<2) such as Li₃N, SiS₂-based glass (LiₓSi_{y}S_{z}, where 0<x<3, 0<y<2, and 0<z<4) such as Li₃PO₄₋ Li₂S-SiS₂, P₂S₅-based glass (LiₓP_{y}S_{z}, where 0<x<3, 0<y<3, and 0<z<7) such as LiI-Li₂S-P₂S₅, or a mixture thereof, but the present invention is not limited thereto.

When the above-described high dielectric constant inorganic material, inorganic material having piezoelectricity, and inorganic material having lithium ion transfer ability are used together, the effects obtained through these ingredients may be further improved.

The size of each of the inorganic materials, which is in a particle form, is not particularly restricted. In order to form a coating layer having a uniform thickness and to achieve appropriate porosity, however, each of the inorganic materials may have a size of 0.001 µm to 10 µm. In the case in which the size of each of the inorganic materials is less than 0.001 µm, dispersibility is reduced, whereby it is difficult to exhibit a uniform insulation effect. In the case in which the size of each of the inorganic materials is greater than 10 µm, it is difficult to form a thin coating layer. In addition, a short circuit may easily occur in the battery when the battery is charged and discharged due to excessively large-sized pores.

### Binder

The binder is used to bind the inorganic material and make the inorganic layer have a certain degree of viscosity.

The binder used in the present invention may be a polymer commonly used in the formation of an inorganic layer coated on at least one surface of a porous substrate used as a separator in the art. In particular, the binder may use a polymer having a glass transition temperature (Tg) of -200°C to 200°C so as to improve the mechanical properties such as flexibility and elasticity of the inorganic layer finally formed. Such a binder serves to connect and fix stably inorganic materials therebetween, thereby preventing the mechanical property of the inorganic layer from being reduced.

Also, the binder is not necessarily required to have ionic conductivity, however, a polymer having ionic conductivity may be used to improve the performances of electrochemical devices. Accordingly, the binder used in the present invention preferably includes one having a high dielectric constant. Actually, the degree of dissociation of a salt in an electrolyte solution depends on a dielectric constant of the electrolyte solution. Therefore, as the dielectric constant of the polymer is higher, the degree of dissociation of a salt in an electrolyte solution increases. In this regard, in the present invention, the binder may have a dielectric constant of 1.0 to 100 (measuring frequency = 1 kHz), preferably 10 or higher.

In addition, the binder may be gelatinized when impregnated with a liquid electrolyte solution to exhibit a high degree of swelling in an electrolyte solution. In this regard, it is preferred that the binder polymer has a solubility parameter of 15 to 45 MPa^{1/2}, 15 to 25 MPa^{1/2}, or 30 to 45 MPa^{1/2}. Accordingly, a hydrophilic polymer having many polar groups is favorably used as compared to a hydrophobic polymer such as polyolefine. When the solubility parameter of the polymer is less than 15 MPa^{1/2} or higher than 45 MPa^{1/2}, the polymer is difficult to be swelled by a conventional liquid electrolyte solution for a battery.

Non-limiting examples of the binder may be any one selected from the group consisting of polyvinylidene fluoride-hexafluoropropylene, polyvinylidene fluoride-trichloroethylene, polymethylmethacrylate, polybutylacrylate, polyacrylonitrile, polyvinylpyrrolidone, polyvinylacetate, polyethylene-co-vinylacetate, polyethyleneoxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxymethylcellulose, and tannic acid, or a mixture of two or more thereof.

### Preparation of inorganic layer

The weight ratio of the inorganic material and the binder may range from 1:1 to 99:1, from 60:40 to 90:10, or from 70:30 to 80:20.

In the inorganic layer, the binder allows the adhesion of inorganic materials so that the inorganic materials can be bound with each other. Also, the inorganic layer comes in contact with the porous substrate by the binder. In the inorganic layer, the inorganic materials are substantially present in contact with each other to form a closest packed structure, and an interstitial volume generated from the contact of the inorganic materials with each other becomes a pore of the inorganic layer.

The pores of the inorganic layer are a space formed by the inorganic materials that are in contact with each other in a closed packed or densely packed structure of the inorganic materials. Through the pores of the inorganic layer, it is possible to provide a channel for movement of lithium ions.

### Plasticizer

A plasticizer is used to give flexibility to the inorganic layer and prevent cracking or tearing in the inorganic layer after drying.

Non-limiting examples of the plasticizer may be a polymer comprising at least one or more of propylene glycol, benzyl alcohol, n-butyl alcohol, isopropyl alcohol, diethyl phosphate, triethyl phosphate, trimethyl phosphate, tributyl phosphate, isoamyl acetate, ethyl lactate, methyl lactate, ethyl butylate, diethyl carbonate, tributyl propionate, amyl methyl acetate, isopropyl acetate, diisobutyl ketone, methyl ethyl ketone, dipropyl ketone, ethyl butyl ketone, and methyl amyl ketone, or a copolymer thereof.

The plasticizer is present in an amount of greater than 17 parts by weight to less than 50 parts by weight based on 100 parts by weight of the binder. In the case in which the plasticizer is 17 parts by weight based on 100 parts by weight of the binder, the inorganic layer may be hardened and cracks may occur, or the inorganic layer may be torn when the inorganic layer is attached using a coating tape. In the case in which the plasticizer is 50 parts by weight based on 100 parts by weight of the binder, the amount of the binder is reduced in the total weight of the inorganic layer, thereby sufficient adhesion cannot be obtained. As a result, the inorganic layer cannot be attached to the electrode when the inorganic layer is attached using a coating tape.

In addition, when there is too much plasticizer, the plasticizer itself acts as a resistance, which may deteriorate battery performance.

More preferably, the plasticizer may be greater than 22 parts by weight and less than 40 parts by weight based on 100 parts by weight of the binder. In the case in which the plasticizer is 22 parts by weight based on 100 parts by weight of the binder, since the ratio of plasticizer is low, it is not possible to prevent cracks in the inorganic layer or a phenomenon in which a portion of the inorganic layer is damaged when attached using a coating tape, thereby resulting in a fire due to overcharging. In the case in which the plasticizer is 40 parts by weight based on 100 parts by weight of the binder, the plasticizer acts as a resistance, which may deteriorate battery performance.

The weight average molecular weight of the plasticizer may be 350 g/mol to 10000 g/mol. In the case in which the weight average molecular weight is less than 350 g/mol, there may be a problem in that the inorganic layer does not obtain adhesion that can be attached to the electrode. In the case in which the weight average molecular weight is 10000 g/mol or more, there may be a problem in that the plasticizer may be biased towards one portion. The higher the molecular weight, the better the adhesion and electrical insulation, and the lower the volatility. Therefore, within the above range, it is possible to select a plasticizer capable of exhibiting appropriate adhesion, electrical insulation, and desired air permeability and porosity.

By adding the plasticizer as described above, the inorganic layer can be directly attached to the electrode without causing cracks when attached using a coating tape. In order for the inorganic layer to be attached to one surface of the electrode, the adhesion between the inorganic layer and the electrode must be 20 gf/cm or more. In order to use the inorganic layer as a coating tape used by removing the inorganic layer from the film, it is preferable that the inorganic layer has adhesion that is easily peeled off the film. Therefore, it is preferable that the adhesion between the inorganic layer and the film is less than the adhesion between the inorganic layer and the electrode.

### Additive

The inorganic layer according to the present invention may include an additive other than the inorganic material, the binder, and the plasticizer. The additive is a material which is essentially or additionally required for the improvement of the operation and performances of an electrochemical device, and may be applied without any particular limitation if it requires a continuous supplement due to its consumption during the operation of the electrochemical device.

Non-limiting examples of the additive may be an additive for inhibiting a side reaction occurring in a battery, an additive for improving thermal stability, an additive for inhibiting overcharging, a dispersant, and a mixture of two or more thereof.

As the additive for inhibiting a side reaction occurring in a battery, at least one selected from the group consisting of ethylenediaminetetraacetic acid, tetramethylethylenediamine, pyridine, dipyridyl, ethylbis(diphenylphosphine), butyronitrile, succinonitrile, iodine, ammonium halide, and a derivative thereof, or a mixture of two or more thereof may be used, but the present invention is not limited thereto.

As the additive for improving thermal stability, at least one selected from the group consisting of hexamethyldisiloxane, hexamethoxycyclotriphosphazene, hexamethylphosphoramide, cyclohexylbenzene, biphenyl, dimethylpyrrole, and a derivative thereof, or a mixture of two or more thereof may be used, but the present invention is not limited thereto.

An example of an additive for improving thermal stability may be a flame retardant. The flame retardant may include a phosphor-based or inorganic-based flame retardant, and may further include a flame retardant synergist capable of improving a flame retardant effect in addition to the flame retardant.

As the additive for inhibiting overcharging, at least one selected from the group consisting of n-butyl ferrocene, a halogen-substituted benzene derivative, cyclohexylbenzene, and biphenyl, or a mixture of two or more thereof may be used, but the present invention is not limited thereto.

The dispersant is not limited as long as it is a material that improves dispersibility and maintains uniform dispersion. However, it is preferable that the dispersant is a material having high dispersibility. For example, an anionic surfactant may be used. The anionic surfactant may be a component in which an anionic component containing one or more salts selected from the group consisting of carboxylate, phosphate, sulfonate, and sulfate constitutes a head portion. In addition, examples of substances that can be used as a dispersant may be any one or more selected from oil-soluble polyamines, oil-soluble amine compounds, fatty acids, fatty alcohols, sorbitan fatty acid esters, tannic acid, tannic acid, and pyrogallic acid.

### Coating tape

The coating tape employed in the method according to the present invention can be used in the form of a tape by applying an inorganic layer to a film. The inorganic layer is attached to the film similar to a double-sided adhesive tape before being attached to the electrode. For this purpose, it is preferable that the adhesion between the inorganic layer attachment surface of the film and the inorganic layer itself is greater than the weight of the inorganic layer and lower than the adhesion between the inorganic layer itself and the electrode.

The coating tape can be rolled into a circular shape and stored, and then used by hanging it on a roll when used. Alternatively, the coating tape may take a form that can be used by placing a separate film on a film cut to a specific size and an inorganic layer so as to cover an exposed surface of the inorganic layer and then removing it.

As described above, when the coating tape is rolled into a circular shape and stored or the film is used by removing it, the film may be a release film having different adhesion on both surfaces. When the release film is used in a state in which the coating tape is laminated in multiple layers, the adhesion between the inorganic layer and the attachment surface may be equal to or lower than the adhesion of the other surface for ease of use.

The film may use any material as long as it has a low surface roughness and can be easily peeled so that no residue remains when the inorganic layer is peeled off. Examples of the film may include a synthetic resin film such as polyethylene, polypropylene, ethylene-vinyl acetate copolymer, ethylene-vinyl alcohol copolymer, and polyethylene terephthalate, a metal foil, and the like.

The film may be coated or surface-treated at least on the inorganic layer attachment surface so that no residue of the inorganic layer remains. Examples of the surface treatment include a plasma treatment, a surface modification treatment such as a sulfonation treatment, or a peel treatment such as a silicon treatment, a long cyclic alkyl treatment, and a fluorine treatment.

The film may use a material that evaporates by heat treatment, ultraviolet irradiation, or solution treatment.

Disclosed is also a method of manufacturing a coating tape, the method including 1) preparing an inorganic slurry by mixing a solvent with an inorganic layer composition comprising an inorganic material, a binder, and a plasticizer; 2) applying the inorganic slurry of step 1) to a film; and 3) drying the inorganic slurry applied in step 2) to form an inorganic layer.

The inorganic material, the binder, the plasticizer, and the mixing ratio thereof and the film are as described above.

As the solvent, a conventional solvent known in the art may be used without limitation. Non-limiting examples of solvents include acetone, tetrahydrofuran, methylene chloride, chloroform, dimethylformamide, N-methyl-2-pyrrolidone (NMP), cyclohexane, water, and a mixture thereof.

In the drying step, an oven or a heated chamber may be used in a temperature range in consideration of a vapor-pressure of the solvent. Alternatively, a method of allowing the solvent to volatilize by leaving the inorganic slurry at room temperature is also possible. At this time, a temperature condition of 25°C to 100°C for the temperature range and a condition of a relative humidity of 40% or more may be taken into consideration.

A step of uniformly controlling the amount of the inorganic slurry applied may be further included between step 2) and step 3).

In the step of uniformly controlling the amount of the inorganic slurry applied, it may be uniformly controlled using a roll. Alternatively, a method of cutting the applied surface using a blade may also be used. In addition, a method of placing a film in a container having a desired size, applying a slurry, and then pressing a surface to fit the container may also be used.

In step 2), the inorganic slurry may have a higher binder content in an electrode contact surface than in other portions. By increasing the binder content, it is possible to improve adhesion to an electrode without adding a separate binder.

The coating tape used in the method according to the present invention may have adhesion even after drying in step 3). This is because the inorganic layer is formed by mixing the plasticizer in the binder at a ratio of more than 22 parts by weight and less than 40 parts by weight based on 100 parts by weight of the binder. The coating tape, which maintains adhesion even after drying as described above, may be applied directly to the electrode without adding a separate binder.

### Manufacture of an electrode

The method of manufacturing an electrode according to the present invention includes 1) supporting the coating tape according to the above description on a roll or pressing the coating tape by using a roll, so that the inorganic layer contacts the electrode; and 2) removing the film after applying the inorganic layer of the coating tape to the electrode.

The electrode may be a negative electrode or a positive electrode.

The positive electrode may be manufactured by, for example, applying a positive electrode mixture, in which a positive electrode active material consisting of positive electrode active material particles, a conductive agent, and a binder are mixed, on a positive electrode current collector. As needed, a filler may be further added to the positive electrode mixture.

In general, the positive electrode current collector is manufactured so as to have a thickness of 3 µm to 500 µm. The positive electrode current collector is not particularly restricted, as long as the positive electrode current collector exhibits high conductivity while the positive electrode current collector does not induce any chemical change in a battery to which the positive electrode current collector is applied. For example, the positive electrode current collector may be made of one selected from stainless steel, aluminum, nickel, and titanium. Alternatively, the positive electrode current collector may be made of one selected from aluminum or stainless steel, the surface of which is treated with carbon, nickel, titanium, or silver. Specifically, aluminum may be used. The current collector may have a micro-scale uneven pattern formed on the surface thereof so as to increase the adhesion of the positive electrode active material. The current collector may be configured in various forms, such as those of a film, a sheet, a foil, a net, a porous body, a foam body, and a non-woven fabric body.

The positive electrode active material may include, for example, in addition to the positive electrode active material particles, a layered compound such as lithium nickel oxide (LiNiO₂) or a compound substituted with one or more transition metals; lithium manganese oxide such as the chemical formula Li₁₊ₓMn₂₋ₓO₄ (wherein x ranges from 0 to 0.33), LiMnO₃, LiMn₂O₃, LiMnO₂; lithium copper oxide (Li₂CuO₂); vanadium oxide such as LiV₃O₃, LiV₃O₄, V₂O₅, Cu₂V₂O₇; Ni-site type lithium nickel oxide represented by LiNi₁₋ₓMₓO₂ (wherein M = Co, Mn, Al, Cu, Fe, Mg, B, or Ga, and x ranges from 0.01 to 0.3); lithium manganese composite oxide represented by LiMn₂₋ₓMₓO₂ (wherein M = Co, Ni, Fe, Cr, Zn or Ta, and x ranges from 0.01 to 0.1) or Li₂Mn₃MO₈ (wherein M = Fe, Co, Ni, Cu or Zn); LiMn₂O₄ having a part of Li being substituted with alkaline earth metal ions; a disulfide compound; Fe₂(MoO₄)₃ and so forth, without being particularly limited thereto.

The conductive agent is generally added so that the conductive agent accounts for 0.1 wt% to 30 wt% based on the total weight of the mixture including the positive electrode active material. The conductive agent is not particularly restricted, as long as the conductive agent exhibits high conductivity without inducing any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as a zinc oxide or potassium titanate; a conductive metal oxide, such as a titanium oxide; or conductive substances, such as polyphenylene derivatives, may be used as the conductive agent.

The binder included in the positive electrode is a component assisting in binding between an active material and a conductive agent and in binding with a current collector. The binder is generally added in an amount of 0.1 wt% to 30 wt% based on the total weight of the mixture including the positive electrode active material. Examples of the binder may be polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

The negative electrode may be manufactured by coating a negative electrode active material on a negative electrode current collector and drying the coated negative electrode current collector. The negative electrode may optionally further comprise the foregoing components, as needed.

In general, the negative electrode current collector is manufactured so as to have a thickness of 3 µm to 500 µm. The negative electrode current collector is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase the force of adhesion of a negative electrode active material, in the same manner as the positive electrode current collector. The negative electrode current collector may be configured in various forms, such as those of a film, a sheet, a foil, a net, a porous body, a foam body, and a non-woven fabric body.

The negative electrode active material may include, for example, carbon such as non-graphitized carbon and graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2 and 3 elements of the periodic table, halogen; 0<x≤1; 1≤y≤3; 1≤z≤8); lithium metal; lithium alloy; silicon-based alloy; tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer, such as polyacetylene; or a Li-Co-Ni-based material.

The roll may include a guide roll, a heating roll, and a heating and pressing roll. The roll may press or heat and press the coating tape depending on the adhesion of the coating tape. The strength of such pressure may vary depending on the adhesion of the coating tape. However, it is preferable that the strength of such pressure is the same or stronger than a strength to the extent that the coating tape can be formed an inorganic layer on one surface or both surfaces of the electrode.

In the method of manufacturing an electrode according to the present invention, an inorganic coating layer is formed on the electrode by using the adhesion of the inorganic layer itself without adding a separate binder.

The electrode of the present invention may form an electrode assembly by stacking an electrode of the present invention thereon. As another example, a separator made of only a porous substrate, a separator coated with a separate inorganic coating layer on a porous substrate, or an electrode of the present invention may be stacked on the electrode of the present invention.

As the porous substrate, any porous substrate used for a separator of a battery may be used, but it is preferable to use a porous substrate having excellent ionic conductivity. A pore diameter of the porous substrate is typically 0.01 µm to 10 µm, and a thickness thereof is typically 5 µm to 300 µm. Examples of such a porous substrate include sheets or non-woven fabrics made of an olefin polymer such as polypropylene, glass fibers, or polyethylene, which have chemical resistance and hydrophobicity. When a solid electrolyte such as a polymer is used as an electrolyte, the solid electrolyte may also serve as a separator. A separate inorganic coating layer on the porous substrate may be the same as the inorganic coating layer defined in the present invention. Alternatively, a separate inorganic coating layer on the porous substrate may be one excluding a plasticizer from the inorganic coating layer defined in the present invention.

The electrode assembly stacked as described above may be subjected to a rolling process after stacking.

At this time, a rolling temperature may be 90°C to 130°C. The preferred temperature is 100°C or 125°C. When the rolling temperature is less than 90°C, the adhesion between the electrode and the separator does not reach a desired level, which is not preferable. When the rolling temperature is greater than 130°C, the performance of the binder is deteriorated, thereby resulting in lower the adhesion, and the separator may be deformed, which is not preferable.

The pressure during rolling may be about 1 to about 3 tons. At this time, the most preferable range may be about 1.5 to about 2 tons. When the pressure during rolling exceeds 3 tons, damage such as tearing may occur, and when the pressure during rolling is less than 1 ton, the desired level of adhesion between the electrode and the separator cannot be obtained. When the pressure during rolling is greater than 3 tons, damage such as tearing may occur.

The rolling time during rolling may be from about 1 minute to about 3 minutes. At this time, the most preferred range may be from about 1.5 minutes to about 2.5 minutes. When the rolling time is greater than 3 minutes, structural deformation of the separator may occur. When the rolling time is less than 1 minute, the adhesion between the electrode and the separator cannot be achieved at a desired level.

The present invention also provides a battery pack including a unit cell as a unit battery and a device including the battery pack as a power source. The unit cell of the present invention may itself be a power supply device used for a drone or a laptop computer, and may be used in the form of stacking unit cells. specifically, the battery pack may be used as a power source for a device requiring the ability to withstand high temperatures, a long lifespan, high rate characteristics, etc. Preferred examples of the device may include a mobile electronic device, a wearable electronic device, a power tool driven by a battery-powered motor, an electric vehicle (EV), a hybrid electric vehicle (HEV), a plug-in hybrid electric vehicle (PHEV), and an energy storage system. However, the present invention is not limited thereto.

The structure and manufacturing method of the device are well known in the art to which the present invention pertains, and a detailed description thereof will be omitted.

Hereinafter, the present invention will be described with reference to the following examples. These examples are provided only for easier understanding of the present invention and should not be construed as limiting the scope of the present invention.

### Example 1 (weight ratio of plasticizer to binder: 22)

20 g of inorganic powder, 10 g of acetone as a solvent, 2.5 g of CMC (Carboxly Methyl Cellulose) as a dispersant were pre-dispersed, and then 20 g of PVdF-HFP binder and 4.4 g of dibutyl phthalate were added and dispersed. The composition was applied to a PET film and then dried to prepare a coating tape.

The coating tape was applied to a negative electrode using graphite as an active material on lithium metal and a positive electrode using NCMA as an active material on aluminum.

Thereafter, a polyolefin porous substrate was stacked between the negative electrode and the positive electrode, and then rolled at 90°C at a pressure of 100 MPa for 10 seconds to form a unit cell.

### Example 2 (weight ratio of plasticizer to binder: 26)

In Example 1, dibutyl phthalate was changed to 5.2 g to prepare a coating tape. The subsequent steps are the same as in Example 1.

### Example 3 (weight ratio of plasticizer to binder: 28)

In Example 1, dibutyl phthalate was changed to 5.6 g to prepare a coating tape. The subsequent steps are the same as in Example 1.

### Example 4 (weight ratio of plasticizer to binder: 36)

In Example 1, dibutyl phthalate was changed to 7.2 g to prepare a coating tape. The subsequent steps are the same as in Example 1.

### Example 5 (weight ratio of plasticizer to binder: 40)

In Example 1, dibutyl phthalate was changed to 8 g to prepare a coating tape. The subsequent steps are the same as in Example 1.

### Comparative Example 1 (weight ratio of plasticizer to binder: 0)

In Example 1, dibutyl phthalate was changed to 0 g to prepare a coating tape. The subsequent steps are the same as in Example 1. The slurry was applied to the positive electrode and negative electrode of Example 1, respectively. Thereafter, a unit cell was formed by stacking a polyolefin porous substrate between the negative electrode and the positive electrode.

### Comparative Example 2 (weight ratio of plasticizer to binder: 17)

In Example 1, dibutyl phthalate was changed to 3.4 g to prepare a coating tape. The subsequent steps are the same as in Example 1.

### Comparative Example 3 (weight ratio of plasticizer to binder: 50)

In Example 1, dibutyl phthalate was changed to 10 g to prepare a coating tape. The subsequent steps are the same as in Example 1.

At this time, in the case of Comparative Example 2, when the composition was dried, the coating layer was hardened and cracks occurred, or the coating layer was torn when the composition was applied to the electrode. As a result, a unit cell could not be manufactured. In the case of Comparative Example 3, coating on the negative electrode was impossible due to poor adhesion.

### Overcharging fire evaluation

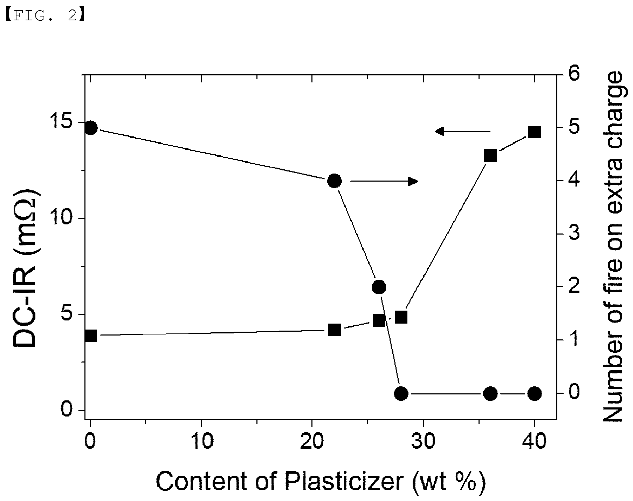

The unit cells of Examples 1 to 5 and Comparative Example 1 were formed into a 3A pouch-type battery cell, and then charged to 4.2 V with a constant current. FIG. 2 shows a state after charging a lithium secondary battery fully charged to be 100% SOC under a condition of 8.4 V / 1 C.

As can be seen in FIG. 2, in the case of Comparative Example 1, fire was observed in all five batteries. However, fire was observed in four batteries out of five batteries in Example 1, and fire was observed in two batteries out of five batteries in Example 2. In Examples 3 to 5, there was no fire observed in five batteries. Thus, it can be seen that the battery formed by the method of Example is more excellent in safety.

### Resistance evaluation

The voltage change was measured when a 3 C pulse at SOC 50 was applied to the unit cells of Examples 1 to 5 and Comparative Example 1 for 10 seconds. The results are shown in FIG. 2.

As can be seen in FIG. 2, the resistance value is 4.19 mΩ for Example 1, 4.685475 mΩ for Example 2, 4.86 mΩ for Example 3, 13.29595 mΩ for Example 4, 14.52 mΩ for Example 5, and 3.89 mΩ for Comparative Example 1. It can be seen that the resistance value increases as the amount of plasticizer increases. In particular, it can be seen that the resistance value increases significantly between Example 2 and Example 3. Thus, it can be identified that when the amount of the plasticizer with respect to the binder exceeds the range of Example 5, the resistance value is excessively increased and the performance of the battery is very deteriorated.

### Battery cell capacity retention rate evaluation experiment

The unit cells of Example 1, Example 3, Example 5, and Comparative Example 1 were charged at 25°C, 1 C to reach 4.2 V, and were discharged at a constant current of 1 C to reach 3.0 V. The charge and discharge were performed for 100 cycles, and the discharge capacity after 1 cycle and the discharge capacity after 100 cycles were measured. Thereafter, capacity retention rates were measured according to the following equation (1). Capacity retention rate (%) = {Discharge capacity after cycle / Discharge capacity after 1 cycle} X 100

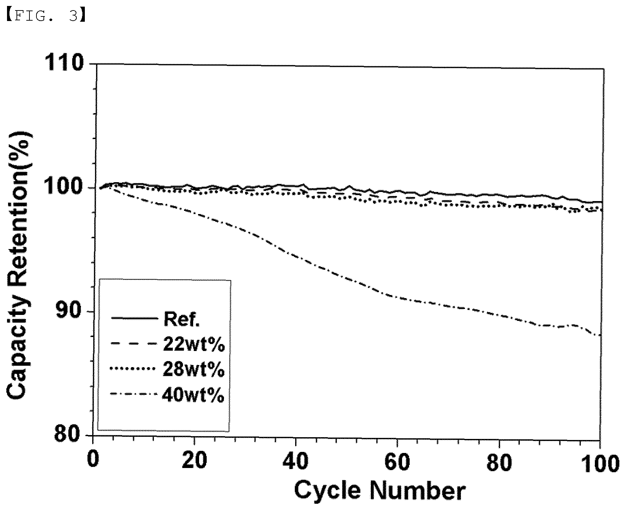

The capacity retention rates measured according to the above experiment is shown in FIG. 3.

As shown in FIG. 3, in the case of Examples 1 and 3, and Comparative Example 1, similar capacity retention rates are shown. However, in the case of Example 5, it can be seen that the capacity decreases like the resistance value.

The discharge capacity after 100 cycles is 97.6% for Example 1, 98.5% for Example 3, 88.5% for Example 5, and 99.23% for Comparative Example 1. As described above, when the amount of plasticizer with respect to the binder is the same as in Example 5, it can be seen that the battery capacity is in a good range while securing the safety of the battery. When a plasticizer exceeding the range of Example 5 is used, it can be identified that the capacity retention rate is also very poor.

### [Industrial Applicability]

The present invention provides an adhesive coating tape for an inorganic layer that can be attached to one surface or both surfaces of an electrode for insulation, thereby preventing an internal short circuit of a battery due to shrinkage of a separator, and reducing a phenomenon in which an electrode layer is impregnated with the inorganic layer particles, compared to the case of using a slurry. Therefore, the resistance of a cell is reduced compared to the shrinkage reduction rate of the separator, thereby it is possible to obtain a battery having excellent performance and safety.

In addition, since a separate binder is not added between the electrode and the inorganic layer, a capacity with respect to the size of the battery is increased, and the manufacturing method of an electrode is simple.

In addition, by adding it in the form of a tape, the thickness of the inorganic layer becomes uniform and the resistance and ionic conductivity become uniform, thereby improving the capacity and output of the battery.

The pore distribution and pore size of the inorganic layer can also be kept constant.

## Claims

1. A method of manufacturing an electrode for coating the inorganic layer on one surface or both surfaces of an electrode using a coating tape, the method comprising:
1) supporting the coating tape on a roll or pressing the coating tape by using a roll, so that the inorganic layer contacts the electrode; and
2) removing the film after applying the inorganic layer of the coating tape to the electrode;
wherein the coating tape comprises:
a film; and
an inorganic layer comprising an inorganic material, a binder, and a plasticizer attached to one surface of the film,
wherein the amount of plasticizer is greater than 17 parts by weight to less than 50 parts by weight based on 100 parts by weight of the binder.

2. The method according to claim 1, wherein the plasticizer comprises a polymer comprising at least one or more of propylene glycol, benzyl alcohol, n-butyl alcohol, isopropyl alcohol, diethyl phosphate, triethyl phosphate, trimethyl phosphate, tributyl phosphate, isoamyl acetate, ethyl lactate, methyl lactate, ethyl butylate, diethyl carbonate, tributyl propionate, amyl methyl acetate, isopropyl acetate, diisobutyl ketone, methyl ethyl ketone, dipropyl ketone, ethyl butyl ketone, and methyl amyl ketone, or a copolymer thereof.

3. The method according to claim 1, wherein the inorganic layer further comprises any one of an additive for inhibiting a side reaction occurring in a battery, an additive for improving thermal stability, an additive for inhibiting overcharging, and a mixture of two or more thereof, in addition to the inorganic material, the binder, and the plasticizer.

4. The method according to claim 1, wherein the film is a release film having different adhesion on both surfaces.

5. The method according to claim 4, wherein the inorganic layer attachment surface of the release film is coated or surface-treated.

6. The method according to claim 1, wherein a separate binder is not added in step 2).

## Patentansprüche

1. Verfahren zur Herstellung einer Elektrode zum Beschichten der anorganischen Schicht auf eine Oberfläche oder beide Oberflächen einer Elektrode unter Verwendung eines Beschichtungsbands, wobei das Verfahren umfasst:
1) Trägern des Beschichtungsbands auf einer Walze oder Pressen des Beschichtungsbands unter Verwendung einer Walze, so dass die anorganische Schicht in Kontakt mit der Elektrode steht; und
2) Entfernen der Folie nach dem Auftragen der anorganischen Schicht des Beschichtungsbands auf die Elektrode;
worin das Beschichtungsband umfasst:
eine Folie; und
eine anorganische Schicht, umfassend ein anorganisches Material, ein Bindemittel und ein Plastifiziermittel, angebracht an eine Oberfläche der Folie,
worin die Menge des Plastifiziermittels größer ist als 17 Gewichtsteile bis weniger als 50 Gewichtsteile, bezogen auf 100 Gewichtsteile des Bindemittels.

2. Verfahren gemäß Anspruch 1, worin das Plastifiziermittel ein Polymer umfasst, umfassend zumindest eines oder mehrere von Propylenglykol, Benzylalkohol, n-Butylalkohol, Isopropylalkohol, Diethylphosphat, Triethylphosphat, Trimethylphosphat, Tributylphosphat, Isoamylacetat, Ethyllactat, Methyllactat, Ethylbutylat, Diethylcarbonat, Tributylpropionat, Amylmethylacetat, Isopropylacetat, Diisobutylketon, Methylethylketon, Dipropylketon, Ethylbutylketon und Methylamylketon, oder ein Copolymer hiervon.

3. Verfahren gemäß Anspruch 1, worin die anorganische Schicht ferner irgendeines von einem Additiv zum Inhibieren einer Nebenreaktion, die in einer Batterie auftritt, einem Additiv zur Verbesserung der thermischen Stabilität, einem Additiv zum Inhibieren von Überladen und einer Mischung von zwei oder mehr hiervon, zusätzlich zu dem anorganischen Material, dem Bindemittel und dem Plastifiziermittel umfasst.

4. Verfahren gemäß Anspruch 1, worin die Folie eine Ablösefolie mit unterschiedlicher Adhäsion auf beiden Oberflächen ist.

5. Verfahren gemäß Anspruch 4, worin die anorganische Schicht-Anbringungsoberfläche der Ablösefolie beschichtet oder oberflächenbehandelt ist.

6. Verfahren gemäß Anspruch 1, worin im Schritt 2) kein separates Bindemittel zugegeben wird.

## Revendications

1. Procédé de fabrication d'une électrode pour un revêtement de la couche inorganique sur une surface ou les deux surfaces d'une électrode en utilisant un ruban de revêtement, le procédé comprenant :
1) un support du ruban de revêtement sur un rouleau ou un appui sur le ruban de revêtement en utilisant un rouleau, de sorte que la couche inorganique entre en contact avec l'électrode ; et
2) un retrait du film après une application de la couche inorganique du ruban de revêtement sur l'électrode ;
dans lequel le ruban de revêtement comprend :
un film ; et
une couche inorganique comprenant un matériau inorganique, un liant et un plastifiant fixé à une surface du film,
dans lequel la quantité de plastifiant est supérieure à 17 parties en poids à moins de 50 parties en poids sur la base de 100 parties en poids du liant.

2. Procédé selon la revendication 1, dans lequel le plastifiant comprend un polymère comprenant au moins un ou plusieurs composés parmi le propylène glycol, l'alcool benzylique, l'alcool n-butylique, l'alcool isopropylique, le phosphate de diéthyle, le phosphate de triéthyle, le phosphate de triméthyle, le phosphate de tributyle, l'acétate d'isoamyle, le lactate d'éthyle, le lactate de méthyle, le butylate d'éthyle, le carbonate de diéthyle, le propionate de tributyle, l'acétate d'amyle et de méthyle, l'acétate d'isopropyle, la diisobutylcétone, la méthyléthylcétone, la dipropylcétone, l'éthylbutylcétone et la méthylamylcétone ou un copolymère de ceux-ci.

3. Procédé selon la revendication 1, dans lequel la couche inorganique comprend en outre un élément quelconque parmi un additif pour inhiber une réaction secondaire se produisant dans une batterie, un additif pour améliorer la stabilité thermique, un additif pour inhiber une surcharge et un mélange de deux ou plus de ceux-ci, en plus du matériau inorganique, du liant et du plastifiant.

4. Procédé selon la revendication 1, dans lequel le film est une pellicule antiadhésive présentant une adhérence différente sur les deux surfaces.

5. Procédé selon la revendication 4, dans lequel la surface de fixation à la couche inorganique de la pellicule antiadhésive est revêtue ou traitée en surface.

6. Procédé selon la revendication 1, dans lequel un liant séparé n'est pas ajouté à l'étape 2).
